Europäisches Patentamt

European Patent Office

Office européen des brevets

(11) Numéro de publication: **0 282 468 B1**

# FASCICULE DE BREVET EUROPEEN

(45) Date de publication du fascicule du brevet:
17.10.90

(21) Numéro de dépôt: 88870028.3

(22) Date de dépôt: 26.02.88

(51) Int. Cl.⁵: **E04D 3/28**, B32B 17/10,
E06B 3/54

(54) **Panneau vitré cintré.**

(30) Priorité: 27.02.87 BE 8700186

(43) Date de publication de la demande:
14.09.88 Bulletin 88/37

(45) Mention de la délivrance du brevet:
17.10.90 Bulletin 90/42

(84) Etats contractants désignés:
AT BE CH DE ES FR GB GR IT LI LU NL

(56) Documents cités:
EP-A- 0 072 382
DE-A- 2 313 694
FR-A- 416 179
FR-A- 1 396 414
FR-A- 2 138 711
NL-A- 7 802 842
US-A- 1 992 976
US-A- 2 480 642

(73) Titulaire: GLACERIES DE SAINT-ROCH, S.A., Rue des
Glaces Nationales, 169, B-5700 Sambreville(BE)

(72) Inventeur: Mairlot, Henri, Rue du Bois, 218,
B-6300 Acoz(BE)

(74) Mandataire: Plucker, Guy et al, OFFICE
KIRKPATRICK 4 Square de Meeûs,
B-1040 Bruxelles(BE)

ACTORUM AG

## Description

L'invention concerne des panneaux vitrés cintrés autoportants utilisables plus particulièrement pour la construcon de toitures ou de parois et un procédé pour les fabriquer.

L'invention s'applique plus particulièrement à la construction de serres, de verrières, d'auvents et de cloisons transparentes.

On recherche généralement, pour les matériaux de couverture transparents, un faible coût unitaire, une bonne luminosité, une bonne sécurité d'emploi, des qualités durables et une bonne facilité de pose.

Le verre présente, sur les matières plastiques, l'avantage de son inaltérabilité et de sa très grande transparence.

Il est cependant desservi par sa fragilité à faible épaisseur.

Pour obvier à cet inconvénient, on peut augmenter l'épaisseur du verre, mais il en résulte une moins bonne transmission de la lumière, un accroissement de prix et une augmentation du poids, donc aussi des structures de support.

On peut également réduire la surface des volumes, mais cela implique un foisonnement des structures d'encadrement, de même, une perte de lumière et, de surcroît, davantage de manipulations lors du montage.

Une autre solution est de recourir à de grandes surfaces de verre bombé à chaud, pour bénéficier d'une meilleure rigidité mécanique. Il s'agit là cependant, d'une technique fort coûteuse.

Le verre bombé est en effet formé à partir de panneaux de verre plan; il doit être chauffé près de son point de ramollissement pour l'opération de mise en forme, ce qui est coûteux en énergie. Les panneaux de verre bombé doivent ensuite être travaillés et transportés sous cette forme, ce qui augmente fortement les risques de bris.

On sait qu'un traitement de trempe (thermique ou chimique) du verre établit, d'une part, des tensions de compression permanentes dans les couches externes de celui-ci, ce qui a pour résultat une résistance supérieure à la rupture par la flexion, et, d'autre part, des contraintes de traction dans les couches internes de la pièce de verre, ce qui a pour résultat qu'en cas de bris, la pièce de verre se divise en un grand nombre de fragments, réduisant ainsi les risques de blessure par lacération.

Les feuilles de verre trempé chimiquement (par un traitement de diffusion d'ions) présentent de bonnes caractéristiques de fragmentation en cas de rupture. Toutefois, les feuilles de verre trempé chimiquement ne présentent pas une résistance suffisante à la rupture sous l'effet du choc de petits objets durs qui entaillent la surface du verre ou y pénètrent. En effet, l'épaisseur de la couche en compression en surface du verre trempé chimiquement n'est guère que de l'ordre de 50 µm. Ce défaut du verre trempé chimiquement est particulièrement important dans le cas de feuilles de verre de grande superficie, telles que des pare-brise de voitures.

Le brevet FR-2 138 711 propose de remédier à cet inconvénient du verre chimiquement trempé en maintenant la feuille de verre élastiquement fléchie de manière telle que des contraintes de compression, dues à l'état fléchi, existent dans un des côtés, le côté ainsi mis en compression étant utilisé comme "face extérieure" de l'article réalisé, c'est-à-dire la face de la feuille de verre qui risque d'être soumise aux projections de petits objets durs (par exemple, la face extérieure d'un pare-brise de voiture).

La technique décrite dans le brevet FR-2 138 711 concerne donc exclusivement le verre trempé chimiquement. On remarquera que cette technique ne permet pas d'obtenir, par flexion élastique d'une feuille de verre plane, une feuille de verre cintrée dont la surface convexe résiste aux impacts de petits objets durs.

Les buts et domaines d'application de la présente invention sont fondamentalement différents de ceux de la technique décrite dans le brevet FR-2 138 711.

On a, en effet, cherché à réaliser des panneaux de verre qui bénéficient à la fois de l'aisance de fabrication et de transport du verre plan (d'où faible coût unitaire, qui ont une surface étendue par rapport à leur périmètre d'encadrement (d'où grande luminosité) et qui présentent en outre une bonne sécurité d'emploi.

Le premier but de l'invention est de réaliser économiquement des panneaux en verre légers, de grandes dimensions et présentant une bonne résistance mécanique.

L'invention a également pour but d'assurer une production simple et économique de ces panneaux.

Un autre but de l'invention est de réaliser un élément de construction cintré, transparent, facile à manipuler et à monter.

L'objet de l'invention est un panneau vitré cintré qui comporte une feuille rectangulaire de verre trempé thermiquement, originalement plane, cintrée à froid et un cadre cintré apte à maintenir la courbure sous contrainte de la dite feuille de verre; ce cadre est formé par l'assemblage de profilés d'encadrement droits disposés le long des bords droits de la feuille de verre et de profilés d'encadrement cintrès disposés le long des bords cintrés de la feuille de verre, les bords de la feuille de verre étant insérés dans une gorge ménagée le long de la face interne du cadre.

Par "cintrage à froid", il y a lieu d'entendre un cintrage qui est effectué sur un verre plan à une température qui est nettement inférieure à la température de ramollissement du verre. En pratique, l'opération de cintrage se fera à une température inférieure à 140°C et dans la plupart des cas (lorsqu'on met en oeuvre du verre thermiquement trempé "simple", c'est-à-dire non feuilleté), cette opération se fera à température ambiante.

Dans une forme de réalisation particulière, la feuille de verre que comporte le panneau est composée de verre feuilleté; cette feuille originalement plane a subi, avant le cintrage, un réchauffage à une température suffisante pour provoquer un ramollissement du plastomère intercalaire.

Dans une forme de réalisation particulière, le cadre cintré est constitué d'un premier élément d'encadrement pourvu le long de sa face interne d'une feuillure apte à recevoir les bords de la feuille de verre et d'un second élément d'encadrement assemblé au premier élément d'encadrement dont il recouvre la dite feuillure en formant ainsi la gorge dans laquelle sont insérés les bords de la feuille de verre.

Suivant une forme de réalisation avantageuse, le cadre du panneau est réalisé à partir de profilés en caisson de section rectangulaire, le côté le plus long de la section étant disposé perpendiculairement à la surface de la feuille de verre, la gorge de maintien s'ouvrant sur le côté du profilé disposé vers l'intérieur du cadre; les profilés sont solidarisés à leurs extrémités par des pièces d'angle. Ces pièces d'angle sont pourvues d'une gorge correspondant à la gorge ménagée dans les profilés et sont aptes à assembler deux profilés du cadre disposés à angle droit.

De façon avantageuse, dans la forme de réalisation ci-dessus, les pièces d'angle sont prolongées par des tenons indentés s'étendant suivant l'axe des profilés constituant le cadre et coopèrent avec des évidements qui s'étendent suivant l'axe longitudinal de ces profilés.

Suivant une forme de réalisation avantageuse, les profilés d'encadrement du panneau suivant l'invention comportent, sur au moins un de leurs petits côtés, une rainure en T. Des rainures correspondantes sont ménagées sur les pièces d'angle où elles se croisent à angle droit.

Suivant une autre forme de réalisation, le cadre du panneau est réalisé à partir de profilés en casson de section en substance rectangulaire, le côté le plus long de la section étant disposé perpendiculairement à la surface de la feuille de verre, la gorge de maintien s'ouvrant sur le côté du profilé disposé vers l'intérieur du cadre; la paroi du caisson tournée vers l'intérieur du cadre présente, à l'intérieur du caisson, au moins deux paires de nervures, chaque paire de nervures formant une petite gaine tubulaire fendue; ces profilés d'encadrement sont assemblés entre eux, à leurs extrémités, par des vis taraudeuses qui traversent l'un des dits profilés à proximité de son extrémité et s'engagent dans les petites gaines tubulares fendues de l'autre profilé. Ces profilés d'encadrement comportent avantageusement, sur au moins un de leurs petits côtés, une rainure en T.

Avantageusement, au moins un ruban de matériau souple ou de colle est disposé le long du cadre dans la zone de contact entre le cadre et la feuille de verre.

Suivant une forme de réalisation optionnelle, un profilé droit supplémentaire relie les profilés cintrès d'encadrement du cadre du panneau en suivant la face concave de la feuille de verre, parallèlement aux profilés d'encadrement droits.

Dans une forme de réalisation de l'invention, les profilés d'encadrement comportent, sur un de leurs petits cotés, des griffes d'une forme apte à coopérer par emboîtement avec les rainures en T des profilés d'encadrement d'un autre panneau vitré cintré de dimensions correspondantes, permettant ainsi la réalisation d'un survitrage.

On peut réaliser de façon avantageuse le panneau suivant l'invention en effectuant les étapes suivantes :

on dispose une feuille rectangulaire de verre trempé sur un gabarit présentant une surface en forme d'arc cylindrique;

on applique sur les parties de la feuille en verre qui n'entrent pas en contact avec la surface du gabarit une force suffisante pour imprimer à cette feuille une courbure correspondant à celle du gabarit, cette opération étant effectuée à une température inférieure à 140°C;

on met en place, sur chacun des deux bords courbes de la feuille de verre ainsi cintrée, un élément profilé cintré muni d'une gorge longitudinale dans laquelle on engage le bord courbe de la feuille de verre;

on met en place sur chacun des deux bords droits de la feuille de verre un élément profilé droit muni d'une gorge longitudinale dans laquelle on engage le bord droit de la feuille de verre;

on assemble par leurs extrémités les éléments profilés cintrès et les éléments profilés droits, de manière à former un cadre complet;

on supprime les forces qui ont permis de cintrer la feuille de verre, et

on enlève le panneau vitré cintré encadré du gabarit.

Suivant une forme de réalisation de ces procédés, le gabarit présente une surface concave en forme d'arc cylindrique.

Suivant une autre forme de réalisation de ce procédé, le gabarit présente une surface convexe en forme d'arc cylindrique.

Suivant un mode de réalisation de ces procédés, la feuille de verre est une feuille en verre trempé thermiquement simple et l'opération de cintrage est effectuée à température ambiante.

Suivant une autre forme d'exécution de ces procédés, la feuille de verre est une feuille de verre feuilleté formée de deux feuilles de verre trempé thermiquement réunies par une couche intermédiaire de plastomère adhésif transparent; dans ce cas, l'opération de cintrage est effectuée à une température suffisante pour provoquer un ramollissement du plastomère et permettre son fluage pendant l'opération de cintrage.

Suivant une forme de réalisation particulière de ce procédé, le plastomère est du butyral de polyviny-

3

le, l'opération de cintrage étant effectuée à une température de plus de 80°C et de moins de 140°C.

Bien entendu, la feuille de verre peut également contenir d'autres plastomères tels que du polyuréthanne, du polycarbonate ou autres ayant un effet mécanique similaire.

L'utilisation de panneaux en verre thermiquement trempé cintrés selon l'invention permet de réaliser de grandes surfaces vitrées résistantes, très lumineuses, décoratives et d'un faible poids relatif.

Les structures de support, les ossatures, les châssis, les encadrements où les panneaux sont montés, peuvent être allégés.

La conception et la construction modulaire permettent des cadences d'assemblage et de montage élevées, ce qui influence favorablement le coût de réalisation d'une paroi vitrée.

Le panneau vitré cintré étant monté selon une méthode très simple et très sûre, il est possible de le réaliser dans des ateliers décentralisés, voire sur le site même d'une construction.

Ces ateliers peuvent être approvisionnés en matières premières, c'est-à-dire essentiellement en verre plat et en profilés, par des moyens de transport classiques.

En cas de bris accidentels, le verre trempé, en particulier, se décompose en une multitude de fragments non coupants qui représentent un risque de blessure très faible pour le personnel.

Si l'on désire encore augmenter le niveau de la sécurité, par exemple lors de la présence permanente de personnes à proximité, on peut employer sans problème du verre feuilleté avec lequel le risque de blessure par coupure est pratiquement inexistant.

En fonction des impératifs liés à la sécurité des personnes et à la réglementation, on peut parfaitement, pour certains usages, utiliser des panneaux survitrés dans lesquels une première feuille est en verre thermiquement trempé ordinaire, la feuille placée du côté du passage du public étant en verre feuilleté.

On peut utiliser sans problème pour la réalisation de ces panneaux vitrés cintrés du verre dont l'épaisseur varie entre 2 et 6 mm. On notera que le terme "verre trempé thermiquement" doit, dans le sens du brevet, être utilisé selon son acception large qui comprend aussi bien le verre trempé thermiquement que le verre "durci" thermiquement.

D'autres particularités et avantages de l'invention ressortiront de la description d'exécutions particulières ci-après citées à titre d'exemples en se référant aux figures annexées, dans lesquelles :

la Fig. 1 est une vue en perspective du panneau vitré cintré à froid;

la Fig. 2 est une vue schématique en perspective d'une table de cintrage portant une feuille de verre trempé en cours de cintrage;

la Fig. 3 est une vue éclatée, avec arrachement partiel, d'un coin de panneau selon l'invention;

la Fig. 4 est une vue éclatée, avec arrachement partiel, d'un noeud d'assemblage de quatre panneaux selon l'invention;

la Fig. 5 est une vue en coupe avec interruption suivant un plan parallèle aux côtés courbes d'un panneau vitré cintré à froid comportant à la fois une traverse supplémentaire et un survitrage, et

la Fig. 6 est une vue éclatée, avec arrachement partiel, d'un noeud d'assemblage de quatre panneaux réalisés suivant un autre mode d'exécution de l'invention.

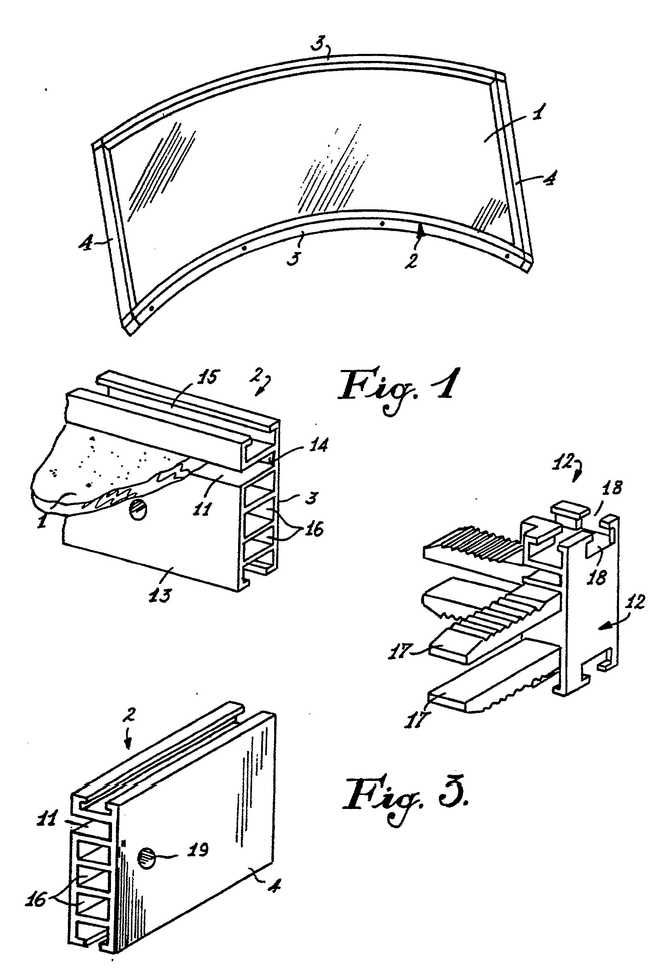

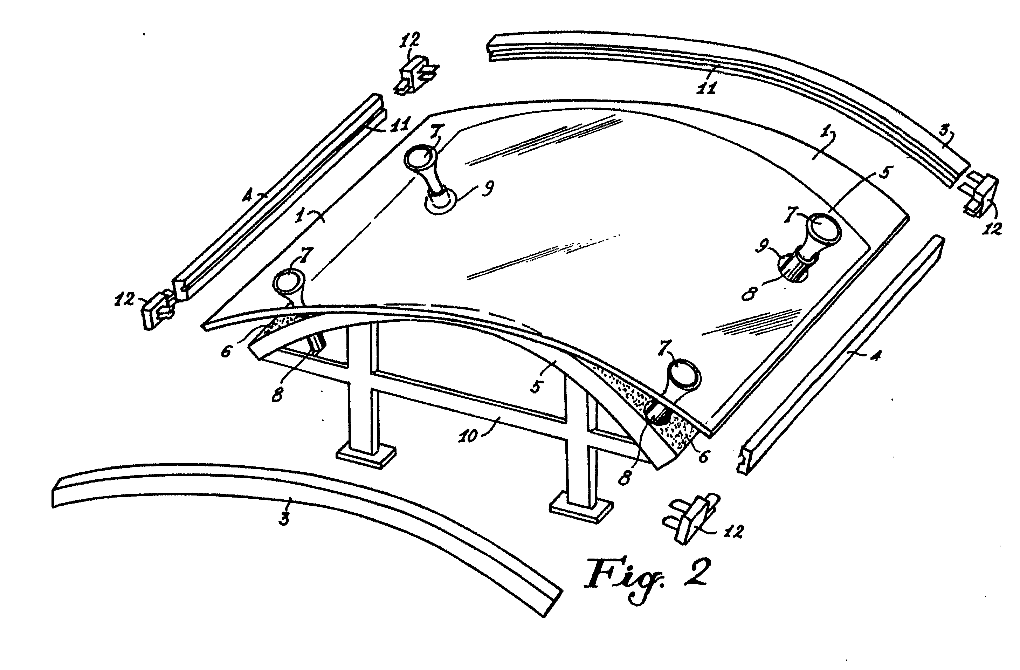

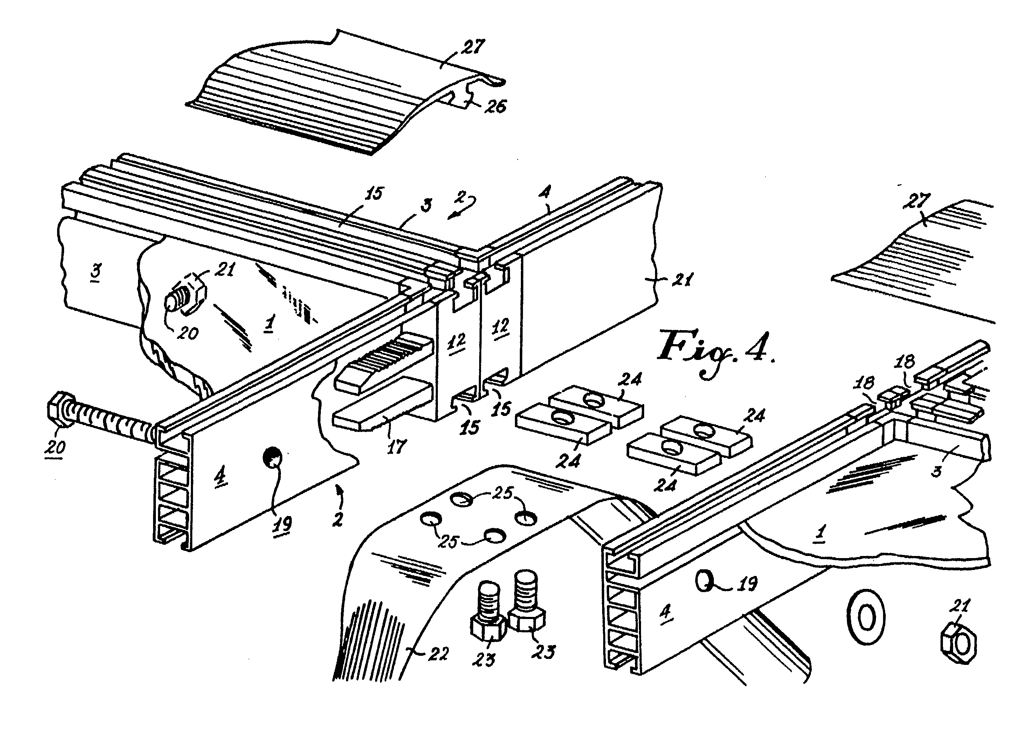

La Fig. 1 est une vue en perspective du panneau en verre cintré conforme à l'invention.

Une feuille de verre trempé thermiquement, cintrée à froid 1 est maintenue cintrée sous contrainte par un cadre 2; ce cadre 2 est composé d'une paire de profilés cintrés 3 et d'une paire de profilés droits 4.

La Fig. 2 est une vue schématique, en perspective, d'une table de cintrage portant une feuille de verre trempé en cours de cintrage.

La table comprend un tablier incurvé 5 couvert d'un matériau souple collé 6. La surface du tablier 5 correspond à la surface d'un segment d'arc cylindrique. Les dimensions du tablier 5 sont légèrement inférieures à celles de la feuille 1 à cintrer.

La feuille à cintrer 1 est saisie par des ventouses 7 montées sur des vérins 8. La traction exercée par ces vérins 8 entraîne la courbure progressive de la feuille de verre qui vient s'appliquer sur le tablier 5. Les ouvertures 9 disposées dans la surface du tablier 5 permettent l'escamotage progressif des ventouses 7. Le tablier 5 de la table de cintrage est supporté par une armature 10 destinée à la reprise des efforts engendrés durant le cintrage. La feuille de verre 1 étant toujours maintenue en place, on ajuste sur chacun des bords cintrés un profilé d'encadrement 3 de forme correspondante.

Les bords de la feuille de verre étant maintenus dans la gorge 11 garnissant les profils cintrés 3, on ajuste ensuite les profilés droits 4 où sont déjà insérés des éléments de coin 12, sur les côtés rectilignes de la feuille de verre 1, les éléments de coin 12 solidarisant les extrémités des profilés droits 4 et des profilés cintrès 3.

On peut à ce moment relâcher les ventouses 7, les sollicitations engendrées par le maintien en cintrage de la feuille de verre trempé 1 étant désormais reprises par le cadre 2.

Cintrée, une feuille de verre est nettement plus rigide que plane par suite de l'augmentation de son moment d'inertie.

Il faut remarquer que le verre en forme de feuille mince recuit est relativement fragile et ne pourrait subir un tel cintrage à froid que pour de très grands rayons de courbure, sa contrainte de rupture à la traction étant de l'ordre de 50 N/m².

4

Le verre trempé (ou durci) thermiquement est plus résistant. Sa contrainte de rupture évolue en fonction de son degré de trempe et peut atteindre 200 N/m² ou davantage.

Cependant, en pratique, après cintrage, la contrainte d'extension, côté convexe, de la feuille de verre cintrée dans les conditions d'utilisation proposées, doit être nettement inférieure à là précontrainte de compression due à la trempe thermique du verre, ce qui permet de travailler en toute sécurité et d'obtenir une cloison correspondant aux normes de sécurité en vigueur en la matière. On obtient de plus une melleure résistance à l'impact, ainsi qu'on peut le voir en se référant au tableau ci-après.

| Verre | | | | Résistance à l'impact (joules) |
|---|---|---|---|---|
| Dimensions mm | Epaisseur mm | Traitement thermique | Rayon de courbure forcée m | |
| 997 x 1650 | 3,8 | recuit | plan | 13 |
| 2000 x 3210 | 3,8 | trempé | 4,6 | 25 |
| 2000 x 3210 | 3,8 | trempé | 9,6 | 27 |
| 2000 x 3210 | 4,8 | trempé | 9,6 | 34 |

Pour l'appréciation de ce tableau, on se rappellera qu'un grelon peut atteindre une énergie cinétique de 20 joules.

La technique de montage proposée est simple, de même que le matériel de mise en oeuvre; la force de cntrage peut notamment être appliquée sur la feuille non pas par traction, mais par pression.

Dans le cas d'une feuille de verre feuilleté, la technique de mise en forme ci-dessus comporte une étape supplémentaire, à savoir un préchauffage de la feuille de verre entre 80 et 140°C, soit à une température suffisante pour entraîner un ramollissement de la feuille de plastomère intercalaire, et bien inférieure à celle nécessaire pour ramollir le verre. On reste donc bien, en dépit de ce préchauffage, dans une technique de cintrage "à froid".

La Fig. 3 est une vue en perspective avec arrachement partiel d'un coin du cadre 2 d'un volume cintré de verre trempé selon l'invention. La feuille de verre 1 est insérée dans une gorge 11 ménagée sur la face interne 13 du cadre 2 constitué par l'assemblage des profilés d'encadrement 3 et 4. Un ruban 14 de matériau souple ou de colle placé dans cette gorge 11 améliore l'étanchéité et les qualités mécaniques de la jonction verre-métal. Des rainures en T 15 supérieure et inférieure ouvertes respectivement vers le haut et vers le bas longent les profilés en caisson 3 et 4 sur chacune de leurs faces parallèles à la feuille de verre 1. Des évidements 16 sont ménagés dans le corps des profilés 3 et 4. Une pièce de coin 12 relie les deux profilés 3 et 4. Elle est munie de tenons d'emboîtement 17 indentés dont la forme correspond à celle des évidements 16 des profilés 3 et 4. La pièce de coin 12 est munie de rainures 18 venant en regard de la rainure 15 de chaque profilé, de façon telle que ces rainures 15 débouchent sur le bord externe du cadre 2. Les tenons d'emboîtement 17 s'engagent dans les évidements 16 du profilé droit 4 et dans ceux du profilé de forme cintrée 3 qui maintient le bord courbé de la feuille de verre 1.

Des trous de fixation 19 percés perpendiculairement au cadre 2 permettent l'insertion de boulons 20 (voir Fig. 4) servant à solidariser entre eux deux panneaux contigus ou encore à fixer le panneau à une structure de support.

La Fig. 4 est une vue éclatée, avec arrachement partiel, d'un noeud d'assemblage de quatre panneaux vitrés cintrés du type représenté aux Fig. 1 et 3.

Les panneaux sont représentés joints deux à deux au moyen de boulons 20 et d'écrous 21 réunissant les profilés 3 juxtaposés de chaque paire de panneaux.

Les quatre panneaux peuvent être fixés sur une structure de support 22, au moyen de vis 23 et d'écrous rectangulaires 24. Les écrous rectangulaires 24 sont insérés dans les rainures en T inférieures 15 courant le long du côté inférieur des profilés 3. Les vis 23 passent par les trous 25 ménagés dans la structure de support 22 et s'engagent dans les écrous rectangulaires 24 fixant ainsi les panneaux sur cette structure de support 22. La forme allongée des écrous 24 répartit les sollicitations et évite une déformation localisée des bords de la ranure inférieure 15.

Les profilés 4 juxtaposés peuvent également être solidarisés entre eux au moyen de boulons 20 (passant par les trous 19) et d'écrous 21.

Sur la face supérieure des panneaux, les rainures en T 15, ouvertes vers le haut, permettent l'insertion de la languette d'accrochage 26 d'un profilé d'étanchéité souple 27 recouvrant la jointure entre deux panneaux adjacents.

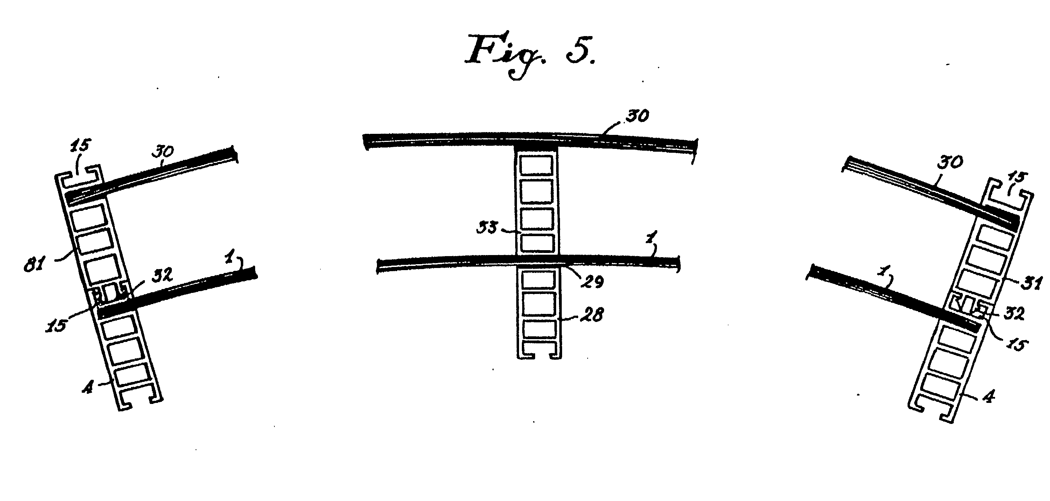

La Fig. 5 est une vue en coupe suivant un plan parallèle aux côtés courbes d'un panneau vitré cintré comportant à la fois des traverses supplémentaires et un survitrage. La traverse supplémentaire 28 est disposée au milieu de la feuille de verre 1 et est fixée, à chacune de ses extrémités, à un des profilés d'encadrement cintrés 3.

La traverse supplémentaire 28 longe, sur toute sa longueur, la face concave de la feuille de verre 1 et la soutient.

Dans la réalisation de la Fig. 5, la traverse supplémentaire 28 est maintenue par un ruban de colle 29.

Le survitrage 30 est maintenu en forme cintrée par un cadre 31. Les profilés constituant ce cadre 31 comportent, sur un de leurs petits côtés, des griffes 32 dont le profil peut s'emboîter dans la rainure supérieure en T 15 des profilés d'encadrement 3 et 4 du premier panneau.

Les cadres 2 et 31 des deux panneaux peuvent donc s'ajuster l'un sur l'autre, formant un ensemble qu peut être monté d'une pièce. Une seconde traverse supplémentaire 33 est disposée entre les feuilles de verre 1 et 30.

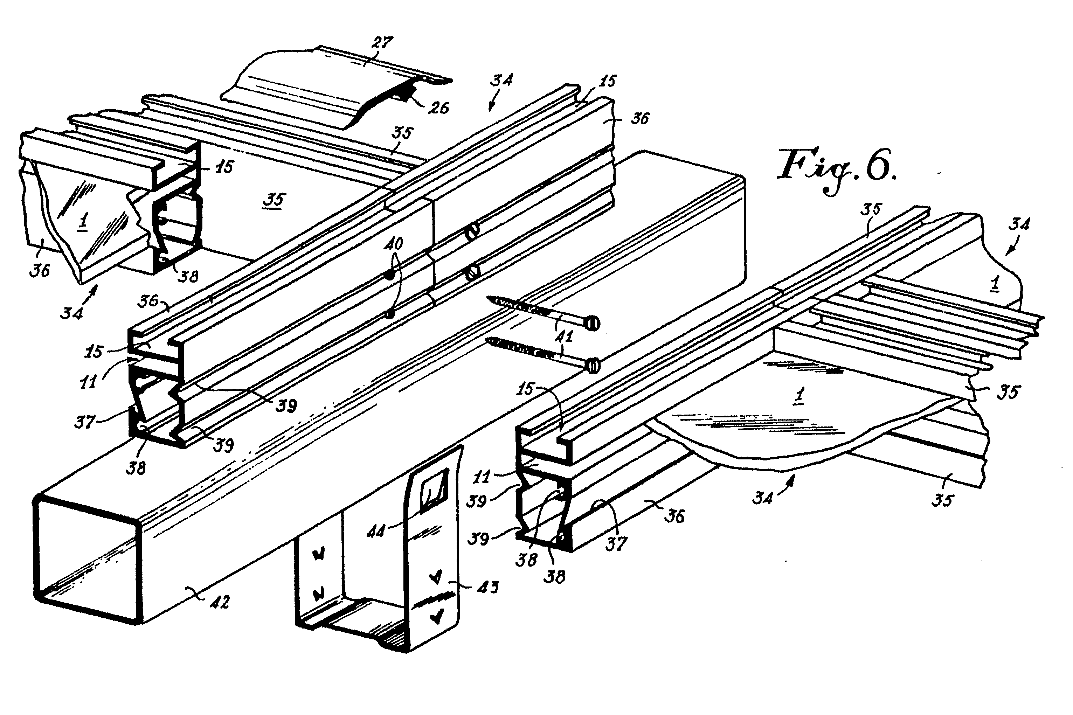

La Fig. 6 montre une autre forme d'exécution d'un panneau vitré cintré suivant l'invention. Il s'agit d'une vue éclatée, avec arrachement partiel, d'un autre mode d'exécution d'un noeud d'assemblage de quatre panneaux vitrés cintrés suivant cette forme d'exécution et la fixation de ces panneaux sur un élément d'ossature de support.

Dans cette forme d'exécution, un panneau vitré cintré 34 comprend une feuille de verre trempé thermiquement 1. Cette feuille de verre est cintrée élastiquement et ses bords sont insérés dans une gorge 11 ménagée sur la face interne d'un cadre formé par l'assemblage de deux profilés cintrés 36 et deux profilés droits 35 qui présentent la même section transversale.

La partie supérieure des profilés 35 et 36 est identique à celle des profilés 3 et 4 décrits plus hauts, et présente donc une rainure longitudinale en T renversé 15 ouverte vers le haut.

Le côté des profilés 35 et 36, qui est tourné vers l'intérieur du cadre, présente une gorge 11 dans laquelle est engagé le bord de la feuille de verre 1.

En dessous de la gorge 11, les profilés 35 et 36 consistent en un caisson dont la section transversale a l'allure générale d'un rectangle.

La paroi de ce caisson tournée vers l'intérieur du cadre présente, du côté extérieur du caisson, un sillon 37 dont le pan inférieur forme un angle aigu (arête d'accrochage) avec la partie de cette paroi située sous ce sillon 37. A l'intérieur du caisson, cette même paroi présente deux paires de nervures, chaque paire de nervures formant une petite gaine tubulaire fendue 38.

La paroi du profilé tournée vers l'extérieur du cadre présente deux sillons 39. Les fonds de ces sillons 39 se trouvent, respectivement, au même niveau que les axes des gaines tubulaires fendues 38.

La Fig. 6 montre comment les profilés 35 et 36 sont assemblés entre eux pour former les cadres des panneaux vitrés cintrés 34. Des trous 40, situés au niveau du fond des sillons 39, traversent les deux parois latérales des profilés 36 à proximité de leur extrémité. Des vis taraudeuses 41 traversent les trous 40 et s'engagent dans les petites gaines tubulaires fendues 38 des profilés 35, solidarisant ainsi l'extrémité d'un profilé 36 avec l'extrémité d'un profilé 35. Les têtes des vis 41 s'engagent dans les sillons 39.

La Fig. 6 montre également comment les panneaux vitrés cintrés 34 peuvent être assemblés entre eux et fixés sur des éléments de support 42 (qui sont, par exemple, des éléments constitutifs d'une ossature de verrière ou de serre).

Deux profilés 36 mis dos à dos sont fixés sur un élément de support 42 et l'ensemble de ces pièces est maintenu en place par des clips 43 en forme de U. Chacune des branches verticales d'un clip 43 a, près de son extrémité libre, un ergot élastique 44 qui, lorsque le clip 43 est mis en place, s'engage dans le sillon 37 d'un profilé 35 ou 36. Des clips 43 permettent ainsi d'assembler entre eux des panneaux vitrés cintrés 34 juxtaposés et de les fixer simultanément sur une ossature de support (formée d'éléments de support 42).

Sur la face supérieure des panneaux 34, les rainures en T renversé 15, ouvertes vers le haut, permettent l'insertion de la languette d'accrochage 26 d'un profilé d'étanchéité souple 27 recouvrant la jointure entre deux panneaux 34 juxtaposés.

**Revendications**

1.- Panneau vitré cintré, caractérisé en ce qu'il comporte :
une feuille rectangulaire de verre trempé thermiquement (1) originalement plane, cintrée à froid,
un cadre cintré (2) apte à maintenir la courbure sous contrainte de la dite feuille de verre (1), le dit cadre (2) étant formé par l'assemblage, par leurs extrémités, de profilés d'encadrement droits (4) disposés le long des côtés droits de la feuille de verre (1) et de profilés d'encadrement cintrés (3) disposés le long des côtés courbes de la feuille de verre (1), les bords de la feuille de verre étant insérés dans une gorge (11) disposée le long de la face interne du cadre (2).

EP 0 282 468 B1

2.- Panneau suivant la revendication 1, caractérisé en ce que la feuille de verre (1) est composée de verre feuilleté.

3.- Panneau suivant l'une quelconque des revendications 1 et 2, caractérisé en ce que le cadre cintré (2) est constitué d'un premier élément d'encadrement pourvu, le long de sa face interne, d'une feuillure apte à recevoir les bords de la feuille de verre (1), et d'un second élément d'encadrement assemblé au premier élément d'encadrement dont il recouvre la dite feuillure en formant ainsi la gorge (11) dans laquelle sont insérés les bords de la feuille de verre (1).

4.- Panneau vitré suivant l'une quelconque des revendications 1 et 2, caractérisé en ce que les profilés d'encadrement (3, 4) sont des profilés en caisson de section rectangulaire, le côté le plus long de la section étant disposé perpendiculairement à la surface de la feuille de verre (1), la dite gorge (11) s'ouvrant sur le côté long (13) du profilé disposé vers l'intérieur du cadre (2), les dits profilés (3, 4) étant solidarisés à leurs extrémités par des pièces de coin (12), chacune de ces pièces de coin (12) étant pourvue d'une gorge correspondant à la gorge (11) ménagée dans les profilés (3, 4), ces pièces de coin (12) étant aptes à assembler deux profilés (3, 4) disposés à angle droit.

5.- Panneau vitré suivant la revendication 4, caractérisé en ce que les pièces de coin (12) sont prolongées par des tenons d'emboîtement indentés (17) s'étendant suivant l'axe des profilés (3, 4), coopérant avec des évidements (16) s'étendant suivant l'axe longitudinal des dits profilés d'encadrement (3, 4).

6.- Panneau vitré suivant l'une quelconque des revendications 4 et 5, caractérisé en ce que les profilés d'encadrement (3, 4) comportent, sur au moins un de leurs petits côtés, une rainure en T renversé (15), des rainures (18) correspondantes étant ménagées dans les pièces de coin (12) où elles se croisent à angle droit.

7.- Panneau vitré suivant l'une quelconque des revendications 1 et 2, caractérisé en ce que les profilés d'encadrement (35, 36) sont des profilés en caisson de section en substance rectangulaire, le côté le plus long de la section étant disposé perpendiculairement à la surface de la feuille de verre (1), la gorge (11) s'ouvrant sur le côté du profilé disposé vers l'intérieur du cadre (2), la paroi du caisson tournée vers l'intérieur du cadre (2) présentant, à l'intérieur du caisson, au moins deux paires de nervures, chaque paire de nervures formant une petite gaine tubulaire fendue (38), les dits profilés d'encadrement (35, 36) étant assemblés entre eux à leurs extrémités par des vis taraudeuses (41) qui traversent l'un des dits profilés (35, 36) à proximité de son extrémité et s'engagent dans les petites gaines tubulaires fendues (38) de l'autre profilé (36, 35).

8.- Panneau vitré suivant la revendication 7, caractérisé en ce que les profilés d'encadrement (35, 36) comportent, sur au moins un de leurs petits côtés, une rainure en T renversé 15.

9.- Panneau vitré suivant l'une quelconque des revendications 6 et 8, caractérisé en ce que les profilés d'encadrement (3, 4, 35, 36) comportent, sur un de leurs petits côtés, des griffes de forme apte à coopérer par emboîtement avec les rainures en T renversé (15) des profilés d'encadrement (3, 4, 35, 36) d'un autre panneau vitré cintré de dimensions correspondantes.

10.- Panneau vitré suivant l'une quelconque des revendications précédentes, caractérisé en ce qu'au moins un ruban de matériau souple (14) ou de colle est disposé le long du cadre (2) dans la zone de contact entre le dit cadre (2) et la feuille de verre (1).

11.- Panneau vitré suivant l'une quelconque des revendications précédentes, caractérisé en ce qu'un profilé droit supplémentaire (28) relie les profilés d'encadrement cintrés (3, 36) du cadre (2) en suivant la face concave de la feuille de verre (1) parallèlement aux profilés d'encadrement droits (4, 35).

12.- Procédé de fabrication d'un panneau vitré cintré, caractérisé en ce qu'il comprend les étapes suivantes :
- placement d'une feuille rectangulaire plane de verre (1) thermiquement trempé, sur un gabarit (5) présentant une surface en forme d'arc cylindrique,
- application sur des parties de la feuille de verre (1) qui n'entrent pas en contact avec la surface du gabarit (5) d'une force suffisante pour imprimer à la feuille de verre (1) une courbure correspondant à celle du gabarit (5), cette opération étant effectuée à une température inférieure à 140°C,
- mise en place sur chacun des deux bords courbes de la feuille de verre (1) ainsi cintrée d'un élément profilé cintré (3, 36) muni d'une gorge longitudinale (11) dans laquelle on engage le bord courbe de la feuille de verre (1),
- mise en place sur chacun des deux bords droits de la feuille de verre (1) d'un élément profilé droit (4, 35) muni d'une gorge longitudinale (11) dans laquelle on engage le bord droit de la feuille de verre (1),
- assemblage, par leurs extrémités, des éléments profilés cintrés (3, 36) et des éléments profilés droits (4, 35), de manière à former un cadre complet,
- suppression des forces qu ont permis de cintrer la feuille de verre (1), et
- enlèvement des panneaux vitrés cintrés (34) encadrés du gabarit (5).

13.- Procédé suivant la revendication 12, caractérisé en ce que le dit gabarit (5) présente une surface convexe en forme d'arc cylindrique.

14.- Procédé suivant la revendication 12, caractérisé en ce que le gabarit (5) présente une surface concave en forme d'arc cylindrique.

15.- Procédé suivant l'une quelconque des revendications 12 à 14, caractérisé en ce que la dite feuille de verre (1) est une feuille de verre thermiquement trempé simple, et que l'opération de cintrage est effectuée à température ambiante.

7

16.- Procédé suivant l'une quelconque des revendications 12 à 14, caractérisé en ce que la feuille de verre (1) est formée de deux feuilles de verre thermiquement trempé réunies par une couche intermédiaire de plastomère adhésif transparent, l'opération de cintrage étant effectuée à une température suffisante pour provoquer un ramollissement du plastomère et permettre son fluage pendant l'opération de cintrage.

17.- Procédé suivant la revendication 16, caractérisé en ce que le plastomère est du butyral de polyvinyle, l'opération de cintrage étant effectuée à une température de plus de 80°C et de moins de 140°C.

**Patentansprüche**

1. Gewölbtes Glaspanel, gekennzeichnet durch:
eine rechteckige, thermisch vorgespannte Glasscheibe (1), die ursprünglich eben war und kalt gewölbt worden ist,
einen gewölbten Rahmen (2) zum Aufrechterhalten der Krümmung der Glasscheibe (1) unter Beanspruchung, wobei der Rahmen (2) durch endseitigen Zusammenbau von entlang der geraden Seiten der Glasscheibe (1) angeordneten geraden Rahmenprofilen (4) und entlang der gekrümmten Seiten der Glasscheibe (1) angeordneten gewölbten Rahmenprofilen (3) gebildet ist, wobei die Ränder der Glasscheibe in eine entlang der Innenseite des Rahmens (2) vorgesehene Nut (11) eingesetzt sind.

2. Panel nach Anspruch 1, dadurch gekennzeichnet, daß die Glasscheibe (1) aus Verbundglas besteht.

3. Panel nach Anspruch 1 oder 2, dadurch gekennzeichnet, daß der gewölbte Rahmen (2) aus einem ersten Rahmenelement, das entlang seiner Innenseite mit einem Falz zur Aufnahme der Ränder der Glasscheibe (1) versehen ist, und einem zweiten Rahmenelement gebildet ist, das mit dem ersten Rahmenelement zusammengebaut ist, wobei es den erwähnten Falz überdeckt und auf diese Weise die Nut (11) bildet, in welche die Ränder der Glasscheibe (1) eingesetzt sind.

4. Glaspanel nach Anspruch 1 oder 2, dadurch gekennzeichnet, daß die Rahmenprofile (3, 4) Kastenprofile mit rechteckigem Querschnitt sind, deren längere Querschnittseite senkrecht zur Oberfläche der Glasscheibe (1) steht, wobei die Nut (11) sich zu der dem Rahmeninnern zugekehrten Langseite (13) des Profiles öffnet, daß die Profile (3, 4) an ihren Enden durch Eckstücke (12) verbunden sind, von denen jedes Eckstück (12) mit einer Nut entsprechend der in den Profilen (3, 4) ausgebildeten Nut (11) versehen ist, und daß die Eckstücke (12) zum Verbinden zweier unter einem rechten Winkel angeordneter Profile (3, 4) bestimmt sind.

5. Glaspanel nach Anspruch 4, dadurch gekennzeichnet, daß die Eckstücke (12) durch gezahnte Steckzapfen (17) verlängert sind, die sich nach der Achse der Profile (3, 4) erstrecken und mit Ausnehmungen (16) zusammenwirken, die sich nach der Längsachse der Rahmenprofile (3, 4) erstrecken.

6. Glaspanel nach Anspruch 4 oder 5, dadurch gekennzeichnet, daß die Rahmenprofile (3, 4) auf zumindest einer ihrer Schmalseiten eine Rinne (15) in Form eines umgekehrten T aufweisen, wobei entsprechende Rinnen (18) in den Eckstücken (12) ausgebildet sind, wo diese Rinnen einander unter einem rechten Winkel kreuzen.

7. Glaspanel nach Anspruch 1 oder 2, dadurch gekennzeichnet, daß die Rahmenprofile (35, 36) Kastenprofile mit im wesentlichen rechteckigem Querschnitt sind, wobei die längere Querschnittseite senkrecht zur Oberfläche der Glasscheibe (1) steht, die Nut (11) sich zu der dem Inneren des Rahmens (2) zugekehrten Profilseite öffnet und die dem Inneren des Rahmens (2) zugekehrte Kastenwand im Kasteninneren zumindest zwei Paare von Rippen aufweist, von denen jedes Rippenpaar einen kleinen geschlitzten Kanal (38) bildet, und daß die Rahmenprofile (35, 36) an ihren Enden durch Gewindeschrauben (41) miteinander verbunden sind, welche eines der Profile (35, 36) nahe dessen Ende durchsetzen und in die kleinen geschlitzten Kanäle (38) des anderen Profiles (36, 35) eingreifen.

8. Glaspanel nach Anspruch 7, dadurch gekennzeichnet, daß die Rahmenprofile (35, 36) auf zumindest einer ihrer Schmalseiten eine Rinne (15) in Form eines umgekehrten T aufweisen.

9. Glaspanel nach Anspruch 6 oder 8, dadurch gekennzeichnet, daß die Rahmenprofile (3, 4, 35, 36) auf einer ihrer Schmalseiten Formungshaken aufweisen, die durch Einstecken in die umgekehrte T-Form aufweisenden Rinnen der Rahmenprofile (3, 4, 35, 36) eines anderen, entsprechende Dimensionen aufweisenden gewölbten Glaspanels mit diesen Rinnen zusammenwirken.

10. Glaspanel nach einem der vorhergehenden Ansprüche, dadurch gekennzeichnet, daß zumindest ein Band (14) aus weichem Material oder aus Klebstoff entlang des Rahmens (2) in der Kontaktzone zwischen dem Rahmen (2) und der Glasscheibe (1) angeordnet ist.

11. Glaspanel nach einem der vorhergehenden Ansprüche, dadurch gekennzeichnet, daß ein zusätzliches gerades Profil (28) die gewölbten Rahmenprofile (3, 36) des Rahmens (2) verbindet, indem es der konkaven Seite der Glasscheibe (1) folgend parallel zu den geraden Rahmenprofilen (4, 35) verläuft.

12. Verfahren zum Herstellen eines gewölbten Glaspanels, gekennzeichnet durch folgende Schritte:
– Anordnen einer ebenen rechteckigen Glasscheibe (1), die thermisch vorgespannt ist, auf einem Formstück (5) mit zylindrisch gebogener Oberfläche,
– Aufbringen einer ausreichenden Kraft auf die mit der Oberfläche des Formstückes (5) nicht in Berührung stehenden Teile der Glasscheibe (1), um der Glasscheibe (1) eine Krümmung entsprechend jener des Formstückes (5) zu erteilen, wobei dieser Vorgang bei einer Temperatur von weniger als 140°C stattfindet,

– Aufbringen eines gewölbten Profilelementes (3, 36) auf jeden der Beiden auf diese Weise gekrümmten Ränder der Glasscheibe (1), wobei das Profilelement mit einer Längsnut (11) ausgeschtattet ist, in welche man den gekrümmten Rand der Glasscheibe (1) einbringt,

– Zusammenbauen der gewölbten Profilelemente (4, 36) und der geraden Profilelemente (4, 35) an ihren Enden, um auf diese Weise einen vollständigen Rahmen zu bilden,

– Aufheben der zum Wölben der Glasscheibe (1) aufgebrachten Kräfte, und

– Abheben der gerahmten gewölbten Glaspanele (34) vom Formstück (5).

13. Verfahren nach Anspruch 12, dadurch gekennzeichnet, dass das Formstück (5) eine konvexe, zylindrisch gebogene Oberfläche aufweist.

14. Verfahren nach Amspruch 12, dadurch gekennzeichnet, dass das Formstück (5) eine konkave, zylindrisch gebogene Oberfläche aufweist.

15. Verfahren nach einem der Ansprüche 12 bis 14, dadurch gekennzeichnet, dass die Glasscheibe (1) eine einfache thermisch vorgespannte Glasscheibe ist und dass der Wölbungsvorgang bei Umgebungstemparatur stattfindet.

16. Verfahren nach einem der Ansprüche 12 bis 14, dadurch gekennzeichnet, dass die Glasscheibe (1) aus zwei thermisch vorgespannten Glasscheiben gebildet ist, die durch eine Zwischenschicht aus einem durchsichtigen klebrigen Plastomer miteinander verbunden sind, wobei der Wölbungsvorgang bei einer Temparatur stattfindet, die ausreicht, um ein Erweichen des Plastomers und sein plastisches Fliessen während des Wölbungsvorganges zu bewirken.

17. Verfahren nach Anspruch 16, dadurch gekennzeichnet, dass das Plastomer Polyvinylbutyral ist, wobei der Wölbungsvorgang bei einer Temperatur von mehr als 80° C und von höchstens 140° C stattfindet.

**Claims**

1. A curved glazed panel, characterized in that it comprises:
a rectangular sheet of originally flat thermally tempered glass (1), curved when cold,
a curved frame (2) adapted to maintain the curvature under constraint of the said sheet of glass (1), the said frame (2) being formed by the assembling, by their extremities, of straight framing sections (4) disposed along the straight sides of the sheet of glass (1) and curved framing sections (3) disposed along the curved sides of the sheet of glass (1), the edges of the sheet of glass being inserted in a slot (11) disposed along the internal face of the frame (2).

2. The panel according to claim 1, characterized in that the sheet of glass (1) is composed of laminated glass.

3. The panel according to either of claims 1 and 2, characterized in that the curved frame (2) is constituted of a first framing element having, along its internal face, a rabbet adapted to receive the edges of the sheet of glass (1), and a second framing element assembled to the first framing element, whereof it covers the said rabbet forming thereby the slot (11) into which are inserted the edges of the sheet of glass (1).

4. The glazed panel according to either of claims 1 and 2, characterized in that the framing sections (3, 4) are box sections of rectangular section, the longest side of the section being disposed perpendicularly to the surface of the sheet of glass (1), the said slot (11) opening on the long side (13) of the section disposed towards the interior of the frame (2), the said sections (3, 4) being joined at their extremities by corner pieces (12), each of these corner pieces (12) being provided with a slot corresponding to the slot (11) formed in the sections (3, 4), these corner pieces (12) being adapted to assemble two sections (3, 4) disposed at a right angle.

5. The glazed panel according to claim 4, characterized in that the corner pieces (12) are extended by indented jointing tenons (17) which extend following the axis of the sections (3, 4), cooperating with channels (16) which extend following the longitudinal axis of the said framing sections (3, 4).

6. The glazed panel according to either of the claims 4 and 5, characterized in that the framing sections (3, 4) comprise, on at least one of their small sides, an inverse T-groove (15), corresponding grooves (18) being formed in the corner pieces (12) where they cross at a right angle.

7. The glazed panel according to either of claims 1 and 2, characterized in that the framing sections (35, 36) are boxed sections of substantially rectangular section, the longest side of the section being disposed perpendicularly to the surface of the sheet of glass (1), the slot (11) opening on the side of the section disposed towards the interior of the frame (2), the wall of the box turned towards the interior of the frame (2) possessing, within the box, at least two pairs of ribs, each pair of ribs forming a small split tubular sheath (38), the said framing sections (35, 36) being mutually assembled at their extremities by subtapping screws (41) which pass through one of the said sections (35, 36) in the vicinity of its extremity and engage in the small split tubular sheaths (38) of the other section (36, 35).

8. The glazed panel according to claim 7, characterized in that the framing sections (35, 36) comprise, on at least one of their small sides, an inverse T-slot (15).

9. The glazed panel according to either of claims 6 and 8, characterized in that the framing sections (3, 4, 35, 36) comprise, on one of their small sides, claws of a form adapted to cooperate by fitting with the inverse T-grooves (15) of the framing sections (3, 4, 35, 36) of another curved glazed panel of corresponding dimensions.

10. The glazed panel according to any one of the preceding claims, characterized in that at least one ribbon of flexible material (14) or of adhesive is disposed along the frame (2) in the zone of contact between the said frame (2) and the sheet of glass (1).

11. The glazed panel according to any one of the preceding claims, characterized in that a supplementary straight section (28) connects the curved framing sections (3, 36) of the frame (2), following the concave face of the sheet of glass (1) parallel to the straight framing sections (4, 35).

12. A process of manufacturing a curved glazed panel, characterized in that it comprises the following steps:

– placement of a flat rectangular sheet of thermally tempered glass (1) on a template (5) presenting a surface in the form of a cylindrical arc,

– application to parts of the sheet of glass (1) which do not come into contact with the surface of the template (5) of a force sufficient for imparting to the sheet of glass (1) a curvature corresponding to that of the template (5), this operation being carried out at a temperature less than 140°C,

– positioning on each of the two curved edges of the sheet of glass (1) thus curved of a curved sectional element (3, 36) equipped with a longitudinal slot (11) in which is engaged the curved edge of the sheet of glass (1),

– positioning on each of the two straight edges of the sheet of glass (1) of a straight section element (4, 35) equipped with a longitudinal slot (11) in which is engaged the straight edge of the sheet of glass (1),

– assembling, by their extremities, curved section elements (3, 36) and straight section elements (4, 35) in a manner such as to form a complete frame,

– suppression of the forces which have permitted the curving of the sheet of glass (1), and

– removing of the framed curved glazed panels (34) from the template (5).

13. The process according to claim 12, characterized in that the said template (5) presents a convex surface in the form of a cylindrical arc.

14. The process according to claim 12, characterized in that the template (5) presents a concave surface in the form of a cylindrical arc.

15. The process according to any one of claims 12 to 14, characterized in that the said sheet of glass (1) is a simple sheet of thermally tempered glass, and that the curving operation is carried out at ambient temperature.

16. The process according to any one of claims 12 to 14, characterized in that the sheet of glass (1) is formed of two sheets of thermally tempered glass joined by an intermediate layer of transparent plastic-like adhesive, the curving operation being carried out at a temperature sufficient to provoke softening of the plastic-like adhesive and to permit it to flow during the curving operation.

17. The process according to claim 16, characterized in that the plastic-like adhesive is polyvinyl butyral, the curving operation being carried out at a temperature of greater than 80°C and less than 140°C.

Fig. 1

Fig. 3.

Fig. 2

Fig. 4.

EP 0 282 468 B1

Fig. 5.

EP 0 282 468 B1

*Fig. 6.*